# EUROPEAN PATENT APPLICATION

(11) **EP 0 658 719 A1**
(43) Date of publication of application: **21.06.1995**
(21) Application number: 94119599.2
(22) Date of filing: 12.12.1994
(51) Int. Cl.: F17C 5/06, F17C 13/00, F16K 1/38

(54) **Device with quick venting valve for filling cylinders with industrial gases at high pressure**

(30) Priority: 14.12.1993 IT TO930266
(71) Applicant: Castelli, Sergio, I-10100 Torino (IT)
(72) Inventor: Castelli, Sergio, I-10100 Torino (IT)
(74) Representative: Modiano, Guido, Dr.-Ing.

(57) **Abstract**

The device comprises a straight portion of filling hose (15) of the high-strength flexible type which has one end permanently connected to the filling station (10) and the other end permanently connected to an elbow-like body (16) which acts as an element for coupling to the cylinder (B) to be filled. The elbow-like body has a manual ring connector (21) for coupling to the cylinder and includes a manually-operated valve (26-34) which allows, when the cylinder has been filled, to vent the pressurized gas from the filling hose (15) to facilitate the uncoupling of the cylinder.

## Description

The present invention relates to a device for filling cylinders with industrial gases at high pressure, typically nitrogen, helium, oxygen, and the like, compressed at approximately 200 bar.

The above mentioned industrial gases are currently loaded into work cylinders by means of a filling device constituted by a high-strength flexible metal hose which is permanently connected at one end to the filling station by means of a threaded connector tightened with a wrench and has, at its other end, a threaded-ring connector that can be tightened manually on the correspondingly threaded union of the cylinder to be filled.

A first drawback of these known filling means arises from the fact that upstream of the filling station, which is substantially constituted by a valve cock, there is a check valve which is suitable to prevent the backflow of any residues contained in the cylinders to be filled which might contaminate the contents of the filling tank.

The presence of the check valve causes the filling hose to remain under pressure after filling; accordingly, it become troublesome to disconnect the manually-tightened connector of the cylinder, forcing the operator to resort to the use of tools, wasting time and possibly damaging the connector.

Another drawback of known filling means resides in that the filling hose must be arranged along an arc with a more or less sharp curvature in order to connect the filling station to the cylinder to be filled, since usually the union of the station is orientated vertically downwardly and the union of the cylinder is orientated horizontally.

This, in addition to mechanically stressing the filling hose, with the risk of breakage, generates tensions in said hose, which is subjected to the high pressure of the fluid; these tensions can trigger dangerous oscillations of said hose that tend to remove it from the union of the cylinder and produce hazardous situations for the operator.

A principal aim of the present invention is to eliminate these and other drawbacks and, within the scope of this general aim, said invention has the important object of providing a device for filling cylinders with industrial gases that facilitates the operations for disconnecting the cylinder once filled, substantially eliminates the danger of breakage and oscillation of the filling hose, and simplifies the operations for connecting the cylinder to the filling hose, especially by eliminating the need to pre-orientate the union of said cylinder with respect to the filling hose.

According to the invention, this aim and this object, as well as others which will become apparent hereinafter, are achieved with a device for filling cylinders having the characteristics described in the appended claims.

Substantially, according to the invention, the device is composed of a straight portion of preferably belted, flexible, high-strength filling hose and of an elbow-like body for connecting one end of said filling hose to the cylinder to be filled; the other end of the hose is permanently coupled to the filling station. The elbow-like body is provided with the manual ring connector for coupling the cylinder and includes a manually-operated valve that allows to vent the filling hose after the cylinder has been filled, facilitating the subsequent uncoupling of the manual ring connector.

The elbow-like body is preferably provided with a rotatable hollow shank for coupling the end of the filling hose; this arrangement avoids the need to orientate the cylinder with respect to the elbow-like body. The portion of the filling hose furthermore runs straight from the filling station to the elbow-like body; this eliminates any oscillations of said hose during filling.

Further characteristics and advantages of the device according to the invention will become apparent from the following detailed description and with reference to the accompanying exemplifying drawings, wherein:

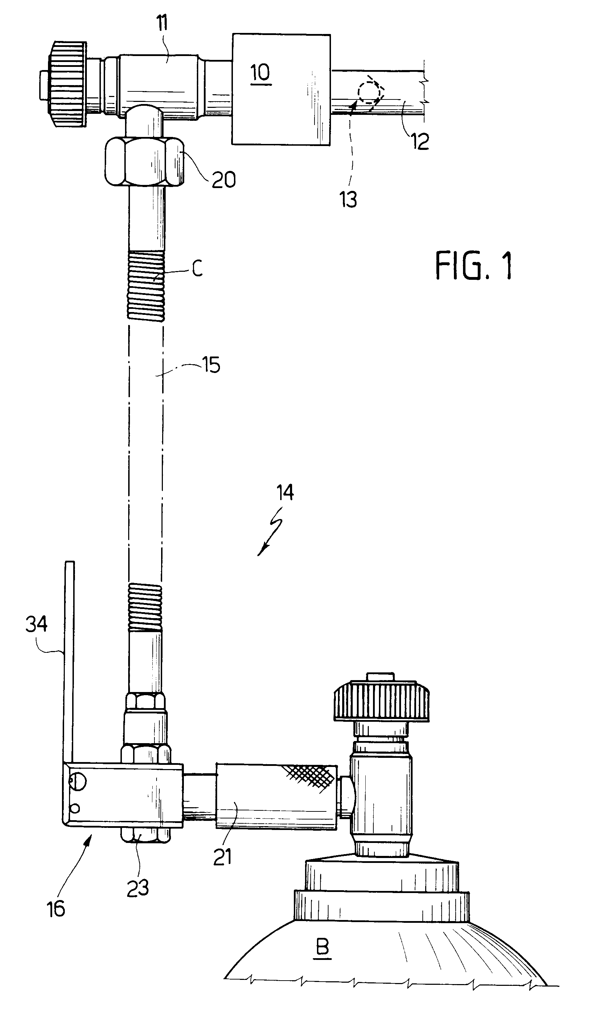

figure 1 is a general elevation view of the filling device according to the invention;
figure 2 is an enlarged-scale view of a detail of figure 1;
figure 3 is an enlarged-scale longitudinal sectional view of the elbow-like body for coupling the filling hose to the cylinder.

In the drawings, the reference numeral 10 designates the filling station for an industrial gas such as nitrogen, helium, oxygen, and the like, and the letter B designates a cylinder to be filled with said gas delivered by the station 10 at high pressure, typically 200 bar.

The station 10 includes a valve cock 11 which is connected by means of a pipe 12 to a filling tank, not shown; a check valve 13 is placed along the pipe 12 upstream of the valve 11 and is suitable to prevent the backflow of any residues contained in the cylinder B.

The reference numeral 14 generally designates the filling device according to the invention, which substantially comprises a straight portion 15 of filling hose and an elbow-like body 16 for coupling said filling hose to the cylinder B. The hose 15 is advantageously of the flexible, high-strength, metal type provided with corrugations that accommodate an external belt C made of metal wire or the like, according to the known arrangement described in the prior Italian Utility Model application no. TO92U000044 filed on February 17, 1992.

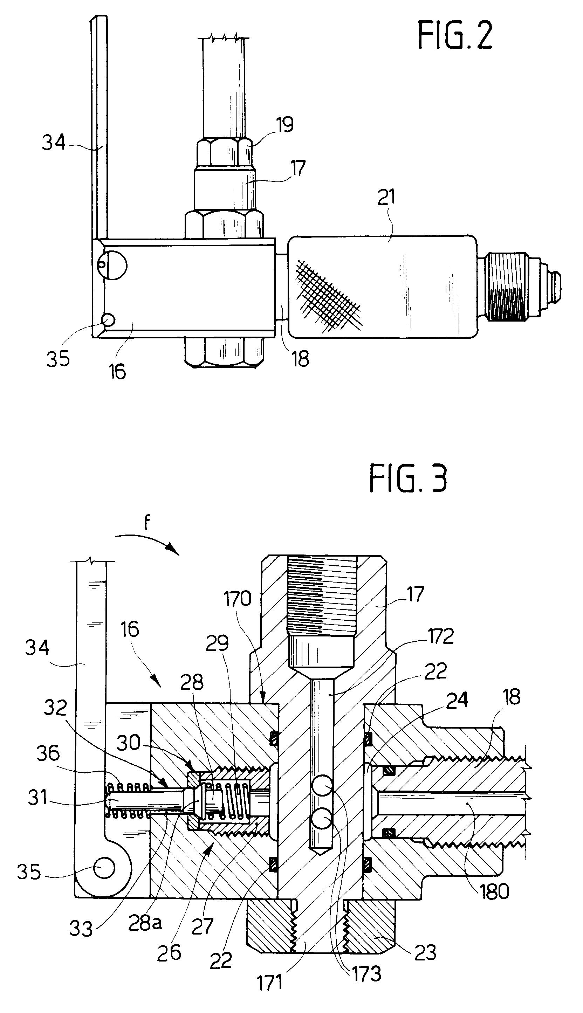

The elbow-like body 16 includes a first hollow shank 17 and a second hollow shank 18 which are arranged at 90^{o} to each other. One end of the hose 15 is permanently coupled to the first shank 17 by means of a threaded connector 19, and the other end of said hose is also permanently coupled to the valve cock 11 by means of a respective connector 20. The second shank 18 has a threaded ring connector 21 which is actuated manually to couple the body 16 to the cylinder B. As clearly shown in figure 3, the first shank 17 for coupling the hose 15 to the body 16 is rotatably mounted in said body with the interposition of sealing rings 22 of the O-ring type. For this purpose, the shank 17 is provided with an abutment shoulder 170 and with a threaded end 171 that receives a retaining nut 23.

An axial hole 172 is formed in the shank 17 and is connected, by means of radial openings 173, to an annular chamber 24 which is in turn connected to the axial hole 180 of the second shank 18 for coupling to the cylinder B.

According to the invention, a manually-operated valve 26 is also connected to the annular chamber of the body 16 and is meant to vent the filling hose 15 after the cylinder B has been filled, in order to facilitate the subsequent separation of the manual ring connector 21 of said cylinder. The valve 26 comprises a valve body 27 which slidingly contains a shutter 28 provided with a head 28a which is advantageously shaped like a truncated cone and is pushed by a spring 29 and by the pressure of the gas so that it hermetically engages by contact a corresponding frustum-shaped valve seat provided in a preferably nonmetallic bottom 30 of the valve body 27.

The shutter 28 is elongated by means of a pin 31 which has a prism-like, typically triangular, cross-section and is slideable in a guiding and retention hole 32 of the body 16, in which it forms axial passages 33 for venting the gas from the annular chamber 24. The pin 31 protrudes from the body 16 enough to be engaged by a control lever 34 which is pivoted to the body 16 at the pivoting point 35 and is suitable, when rotated in the direction of the arrow F in contrast with the action of its own contrast spring 36, to move said pin axially and consequently open the shutter 28.

The effects of the present invention of course cover embodiments that achieve an equal utility by using the same inventive concept.

In particular, the alternative arrangement suitable for loading small cylinders, in which the first shank 17 for coupling the filling hose 15 is permanently screwed onto the body 16, instead of being rotatably mounted with respect to said body, is within the scope of the present invention.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Device for filling cylinders (B) with industrial gases at high pressure delivered by a filling station (10) with a valve cock (11), characterized in that it comprises a straight portion of filling hose (15) of the high-strength flexible type which has one end permanently connected to the filling station (10) and the other end permanently connected to an elbow-like body (16) which acts as an element for coupling to the cylinder (B) to be filled, and in that said elbow-like body has a manual ring connector (21) for coupling to the cylinder and includes a manually-operated valve (26-34) which allows, when the cylinder has been filled, to vent the pressurized gas from the filling hose (15) to facilitate the uncoupling of said cylinder.

2. Device according to claim 1, characterized in that the flexible metal filling hose (15) is of the type provided with corrugations that accommodate an external belt (C) made of metal wire and the like.

3. Device according to claims 1 and 2, characterized in that the elbow-like coupling body (16) has a first hollow shank (17) and a second hollow shank (18) which are arranged at 90^{o} to each other respectively for coupling to the filling hose (15) and to the cylinder (B).

4. Device according to claims 1 and 3, characterized in that the first shank (17) is rotatably mounted in the elbow-like body (16), with the interposition of sealing gaskets, and delimits, in said body, an annular chamber (24) which is connected to the hole of the second shank (18) for coupling to the cylinder (B) and to said manually-operated valve (26); the annular chamber being connected to the radial hole (172) of the first shank (17) by virtue of radial ports (173) formed in said shank.

5. Device according to the preceding claims, characterized in that the manually-operated valve (26) comprises a valve body (27) which slidingly contains a shutter (28) provided with an advantageously frustum-shaped head (28a) that is pushed by the action of a spring (29) and by the pressure of the gases so that it hermetically engages by contact a corresponding frustum-shaped valve seat provided on the bottom (30) of the valve body (27).

6. Device according to the preceding claims, characterized in that the shutter (28) of the valve (26) is extended by a pin (31) that is slideable in a guiding and retention hole (32) of the elbow-like body (16) and protrudes from said body to be engaged by an actuation lever (34) which is pivoted to said body and is suitable, when rotated, to move the shutter (28) so that it opens.

7. Device according to the preceding claims, characterized in that the pin-like extension (31) of the shutter (28) has a prism-like cross-section so as to delimit, together with the walls of its guiding and retention hole (32), axial passages for venting the gas from the annular chamber (24).

8. Device according to claims 1 and 3, characterized in that the first shank (17) is permanently coupled to the elbow-like body (16).

9. Device for filling cylinders with industrial gases at high pressure according to the preceding claims and substantially as described and illustrated and for the specified purposes.
